# EUROPEAN PATENT APPLICATION

(11) **EP 2 614 999 A1**
(43) Date of publication of application: **17.07.2013**
(21) Application number: 12151118.2
(22) Date of filing: 13.01.2012
(51) Int. Cl.: B60R 21/38

(54) **A safety arrangement on a motor vehicle**

(71) Applicant: Autoliv Development AB, 44783 Vårgårda (SE)
(72) Inventor: Schock, Marc, 85757 Karlsfeld (DE); Mccoy, William, 85221 Dachau (DE)
(74) Representative: Parry, Simon James

(57) **Abstract**

There is disclosed safety arrangement on a motor vehicle (1) having a hood (2), the safety arrangement having a hood-lifter (10) actuable to lift at least the rear part of the vehicle's hood (2) from an initial position to an elevated position (27-29), and having an active range limiter (9, 15, 19) operatively connected to at least one sensor (13a) and configured to limit the range (r1, r2, r3) through which said hood (2) is lifted by said hood-lifting arrangement (10) in dependence on a signal from said at least one sensor (13a).

## Description

The present invention relates to a safety arrangement on a motor vehicle, and more particularly relates to an arrangement actuable to lift at least the rear part of the hood of the vehicle.

When a motor vehicle such as a motor car is involved in an accident in which the front part of the vehicle strikes a pedestrian or a cyclist, it is not uncommon for the head of the pedestrian or cyclist (hereinafter collectively referred to as "pedestrian") to be brought forcibly into contact with the hood or bonnet (hereinafter referred to as "hood") of the vehicle. This may cause the hood to deform, but in many cases that deformation is arrested as the hood engages part of the engine block, or other components within the engine compartment, immediately beneath the hood. As a consequence, the movement of the pedestrian's head is suddenly stopped, and the pedestrian's head is thus subjected to a very severe deceleration, which is undesirable.

It has therefore been proposed to provide one or more lifting devices located beneath a rear part of the hood, between the hood and the structure of the motor vehicle, and which are adapted to be actuated in an accident situation of the type described, so that the rear edge of the hood is lifted, thus spacing the hood from the underlying engine block and other components within the engine compartment. A safety arrangement of this type thus enables the head of a pedestrian, if it strikes the hood or bonnet in an accident, to be decelerated more gradually as the hood or bonnet deforms with reduced risk of the hood or bonnet impinging on the underlying engine block.

Conventional hood-lifting arrangements of the general type described above typically raise the rear part of the vehicle's hood through a fixed and relatively small range of movement from an initial position to an elevated position in which the rear part of the hood becomes positioned only a few centimetres (for example 10 cm) above its initial position. Whilst such arrangements generally serve their intended function of decelerating a pedestrian's head through deformation of the hood or bonnet, it has been found that in practice the pedestrian's body can slide over the hood and make potentially injurious contact with the windscreen of the vehicle. It has therefore been proposed to provide such hood-lifting arrangements in combination with so-called pedestrian airbags which are arranged to inflate from beneath the raised rear part of the hood and to deploy over or across the windscreen to provide additional protection to a pedestrian who might otherwise strike the windscreen. A hood-lifting arrangement which is actuable to raise the rear part of the hood through a considerably larger range than is presently conventional could therefore be useful in preventing a pedestrian from sliding over the hood and into contact with the windscreen of a vehicle, and could even obviate the need for a pedestrian airbag arranged to deploy over the windscreen in some installations.

However, in designing such a modified hood-lifting arrangement, it has been noted that a lifting range which is found by experiment to be suitable for some pedestrian impacts may be too large for other types of pedestrian impacts or *vice-versa.* For example, lifting the rear part of the hood through a relatively large range of movement, so as to present the hood at a relatively steep angle to an oncoming pedestrian, can be effective for a relatively slow-speed impact with the pedestrian but can cause significant problems for a relatively high-speed impact with the pedestrian. In a high-speed impact, the time between actuation of the lifting arrangement and the pedestrian making contact with the hood will be considerably reduced, thus increasing the likelihood of the pedestrian striking the hood as it is still moving upwards towards the pedestrian at considerable speed. Such a situation would greatly increase the risk of injury to the pedestrian through contact with the hood, and should thus be avoided.

It is a preferred object of the present invention to provide an improved safety arrangement for a vehicle having a hood.

According to the present invention, there is provided a safety arrangement on a motor vehicle having a hood, the safety arrangement having a hood-lifter actuable to lift at least the rear part of the vehicle's hood from an initial position to an elevated position, and being characterised by the provision of an active range limiter operatively connected to at least one sensor and configured to limit the range through which said hood is lifted by said hood-lifting arrangement in dependence on a signal from said at least one sensor.

Preferably, the hood-lifter includes an airbag arranged for inflation between the hood and the underlying structure of the vehicle to lift the hood from said initial position to said elevated position.

Advantageously, said active range limiter includes a tether connected between the hood and the underlying structure of the vehicle.

Conveniently, the tether is arranged to become tensioned along at least part of its length between the hood and the underlying structure of the vehicle, as the hood is lifted by the hood-lifter, to thereby define a limit to the upwards movement of the hood.

Preferably, the tether passes through a clamp arrangement beneath the hood, the clamp arrangement initially being open to allow substantially free passage of the tether as the hood is lifted from its initial position, and being actuable in response to said signal to close and thus clampingly engage the tether.

Advantageously, said tether is initially wound on a reel rotatably mounted to the structure of the vehicle beneath the hood, the reel being arranged to permit pay-out of the tether as the hood is lifted from its initial position.

Conveniently, said reel is a retractor reel.

Preferably, said at least one sensor includes a pre-crash sensor configured to detect the likely occurrence of an impact between the vehicle and a pedestrian or cyclist.

Advantageously, said pre-crash sensor is configured to produce a signal representative of the speed of the vehicle and/or the closing speed between the vehicle and said pedestrian or cyclist.

Conveniently, said at least one sensor includes a crash sensor configured to detect the occurrence of an impact between the vehicle and a pedestrian or cyclist.

Preferably, said crash sensor is configured to produce a signal representative of the speed of the vehicle.

Advantageously, the active range limiter is configured to limit the range through which said hood is lifted in dependence on the speed of the vehicle and/or the closing speed between the vehicle and said pedestrian or cyclist.

Conveniently, said active range limiter is configured to limit the range through which said hood is lifted to a first range limit in response to a signal representative of said speed or closing speed being above a first predetermined threshold speed value, and to a second range limit in response to a signal representative of said speed or closing speed being above a second predetermined threshold speed value.

Preferably, the second range limit is smaller than the first range limit, and the second threshold speed value is greater than the first predetermined threshold value.

Advantageously, said active range limiter is further configured to limit the range through which the hood is lifted to a third range limit in response to a signal representative of said speed or closing speed being above a third predetermined threshold value, the third range limit being smaller than the second range limit, and the third predetermined threshold speed value being greater than the second predetermined threshold speed value.

So that the invention may be more readily understood, and so that further features thereof may be appreciated, embodiments of the invention will now be described by way of example with reference to the accompanying drawings in which:
Figure 1 is a schematic side view of the front region of a motor vehicle fitted with a hood-lifting safety arrangement in accordance with the present invention;
Figure 2 is a schematic view from above of the front region of the vehicle shown in figure 1;
Figure 3 is a schematic cross-sectional view showing a module of the safety arrangement in more detail;
Figure 4 is a view corresponding generally to that of figure 2, but which shows the vehicle's hood in a lifted position, for example for maintenance;
Figure 5 is a view corresponding generally to that of figure 3, but which shows the module after actuation to lift the hood of the vehicle;
Figure 6 is a schematic side view of the front part of the vehicle, showing the safety arrangement in an actuated condition in which it has lifted the rear part of the hood to provide protection to a pedestrian; and
Figure 7 is a schematic side view of the front part of the vehicle, depicting three alternate actuated raised positions of the hood.

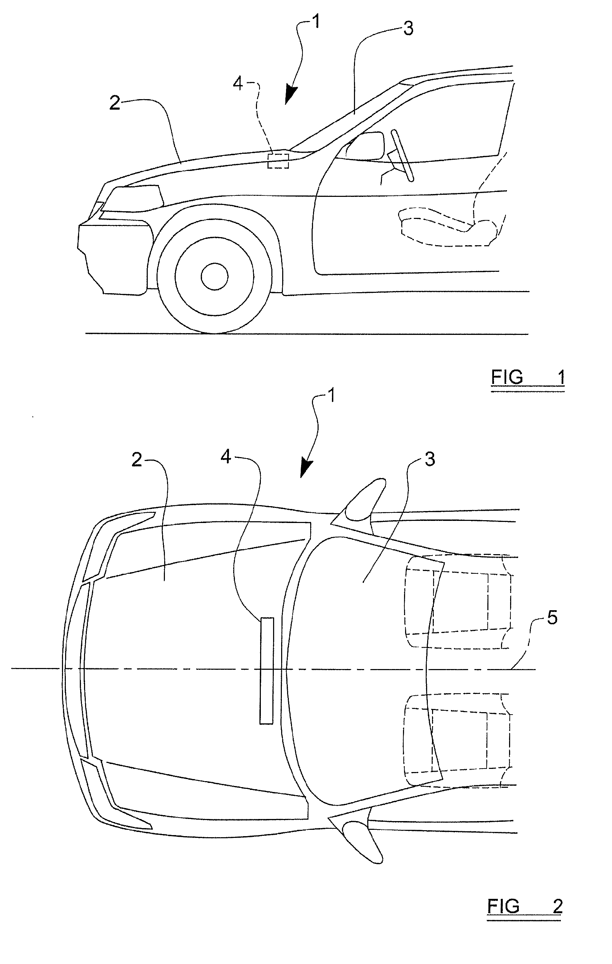

Referring initially to figures 1 and 2, there is illustrated the front part of a motor vehicle 1 having a hood 2 and a windscreen 3, and which is fitted with a hood-lifting module 4 in accordance with the present invention. It is to be noted that whilst the particular vehicle 1 illustrated is a so-called "sports utility vehicle" (SUV), the invention is readily applicable to other types of vehicle.

The hood-lifting module 4 is provided as an integral unit and is located centrally across the width of the vehicle, beneath the rear part of the hood 2. The module 4 is illustrated in figures 1 and 2 as having a generally rectangular configuration, being elongate in the transverse direction of the vehicle.

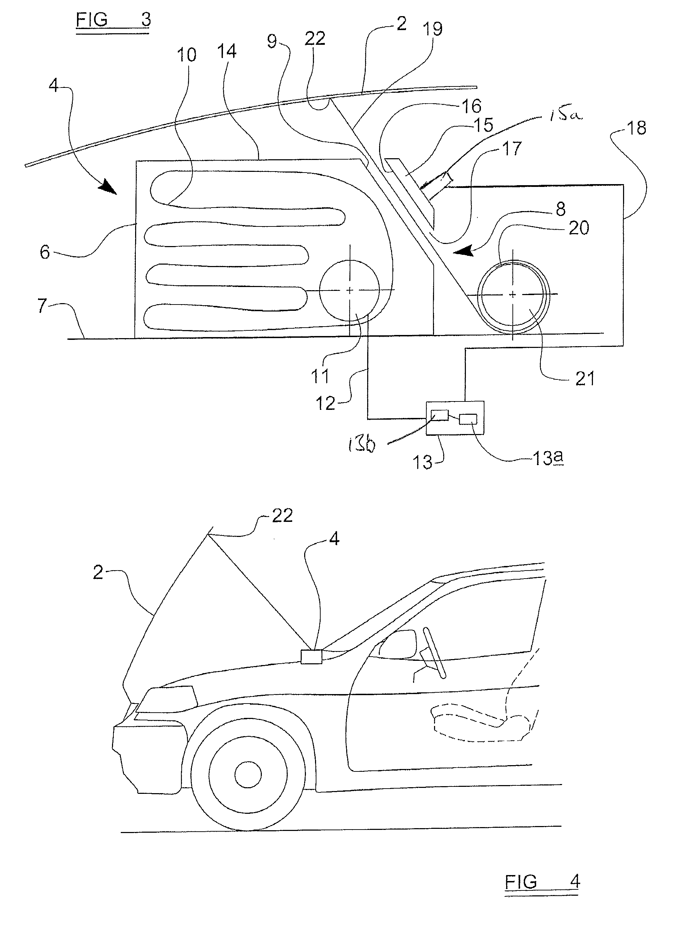

Figure 3 illustrates the module 4 in cross-sectional view, the section being taken along the longitudinal axis 5 of the vehicle. The module comprises a substantially rigid housing 6 which is fixedly secured (for example via fixing bolts or the like) to the chassis or other structure 7 of the vehicle beneath the hood. The particular housing 6 illustrated in figure 3 is generally rectangular in longitudinal cross section, but is chamfered at its upper rear corner 8 so as to define a downwardly and rearwardly sloping outer clamping surface 9, the purpose of which will be described in more detail hereinafter. The clamping surface 9 is preferably substantially planar.

Inside the housing 6 there is provided an inflatable airbag 10 and an associated inflator 11 I such as a gas generator of a type known *per se.* The inflator 11 is provided in fluid communication with the inflatable volume of the airbag 10 in a known manner, and is fixedly secured to the housing 6. The airbag 10 is shown schematically in figure 3 in an initial condition in which it is tightly packed (for example via rolling and or folding) into a package ready for inflation upon actuation of the inflator 11.

The inflator is electrically connected (for example via connection wire 12) to a control unit 13 which includes at least one sensor 13a and a processor 13b. The sensor 13a is configured to sense parameters indicative of the likely or actual occurrence of an impact between the vehicle and a pedestrian, and these signals are processed by the processor 13b provide an actuating signal to the inflator via connection wire 12 in such an event so as to actuate the inflator and thus inflate the airbag 10. Accordingly, the sensor 13a can take any convenient form, and in particular can either be configured as a so-called predictive pre-crash sensor configured to detect the likely occurrence on an impact between the vehicle and a pedestrian, or a reactive crash sensor configured to detect the actual occurrence on an impact between the vehicle and a pedestrian (sometimes known as an "in-crash" sensor). In the event that the sensor 13a is provided in the form of pre-crash sensor, it may be provided as a forward-looking optical sensor and may be configured to produce a signal representative of the speed of the vehicle and/or the closing speed between the vehicle and a pedestrian. In the event that the sensor is provided in the form of an in-crash sensor, then it may comprise an accelerometer arranged to detect an impact between the vehicle and a pedestrian, but may still also be configured to produce a signal representative of the speed of the vehicle.

The housing 6 is provided with an upwardly directed rupturable or otherwise openable door 14 which is shown in figure 3 in its initial closed position.

The chamfered rear corner 8 of the housing is associated with a clamping member 15. The clamping member 15 is shown in its initial unactuated position in figure 15 in which it is spaced from the outer clamping surface 9 defined by the chamfered corner of the housing. However, it is to be noted that the clamping member is mounted for movement towards the clamping surface 9 of the housing, the clamping surface 9 and the clamping member 15 thus cooperating to provide a clamp arrangement, the function of which will be described in more detail below. The clamping member may be biased away from the clamping surface 9 of the housing, towards its initial position as illustrated, and defines a substantially planar surface 16 in facing relation to the clamping surface 9 of the housing. A narrow channel 17 is thus defined between the clamping member 15 and the clamping surface 9 in the initial position.

The moveable clamping member 15 is associated with an actuator 15a which is configured to drive the clamping member rapidly towards the clamping surface 9 in order to close the clamp arrangement upon the receipt of an appropriate signal from a sensor, which may as illustrated be the sensor 13a of the control unit 13 to which the inflator 11 is operatively connected. The actuator illustrated in the embodiment of figure 3 is thus also operatively connected to the sensor 13a via a connection line 18. The actuator 15a can take any convenient form. For example, the actuator 15a could comprise a small gas generator arranged to direct a flow of gas against the clamping member 15 itself or to drive a piston coupled to the clamping member upon actuation in order to drive the clamping member towards the clamping surface 9. Alternatively, the actuator could comprise a mechanical arrangement incorporating one or more springs arranged to drive the clamping member 15 towards the clamping surface 9. In such an arrangement, it is envisaged that the clamping member 15 will initially be held in its anactuated position by a latch-type arrangement which may be released via activation of a pyrotechnic charge or perhaps alternatively a solenoid. The safety arrangement of the illustrated embodiment further includes an elongate flexible tether 19 which may, for example, take the form of a cord or a strap. One end 20 of the tether 19 is wound onto a retractor reel 21 which is fixedly mounted to the structure 7 of the vehicle for rotation about a substantially horizontal axis extending transversely across the vehicle 1. The retractor reel 21 is preferably rotatably biased in a direction effective to reel-in the tether 17 and thus take up any slack in the tether. However, the reel 21 is configured to permit substantially unrestricted and rapid pay-out of the tether 19 against the bias in the reel in the event that the tether is pulled away from the reel.

The tether 19 extends from the reel on which its first end 20 is wound, and passes through the channel 17 defined between the clamping surface 9 and the clamping member 15 in a generally forwards and upwards direction relative to the vehicle. The tether then terminates at its other end 22 where it is fixedly connected to the underside of the vehicle's hood 2.

As illustrated in figure 3, prior to actuation of the hood-lifting safety arrangement, and with the hood 2 in its normal position, the hood 2 is spaced a small distance above the module 4 and the tether 19 extends from the hood, through the open channel 17 and is wound on to the reel 21 under the rotational bias of the reel 21, such that there is no slack on the tether 19.

Figure 4 shows the hood 2 of the vehicle in an open position, for example as will be required in order to gain access to the underlying engine and other componentry of the vehicle, for example for purposes of repair, maintenance or topping up fluid levels. In the particular arrangement illustrated, the hood 2 opens for such routine purposes about a forwardly-located hinge and thus the rear part of the hood is moved upwardly and away from the module 4 so as to become spaced from the module 4 by a considerable distance. The length of the tether 19 is nevertheless sufficient to permit the tether to pay out from the reel 21, against the rotational bias of the reel, as the hood 2 is opened. The tether 19 remains fixedly connected to the hood at its end 22 during opening of the hood 2, and is drawn taught by the bias in the retractor reel 21.

Of course, it is to be appreciated that the safety arrangement of the present invention could also be used in a vehicle having a hood designed to open about a rearwardly located hinge to gain access to the underlying engine bay. Nevertheless, in such a vehicle, the hinge mechanism must be specially configured to permit upwards movement of the rear part of the hood upon actuation of the safety arrangement to lift the hood, as is known to those of skill in the art.

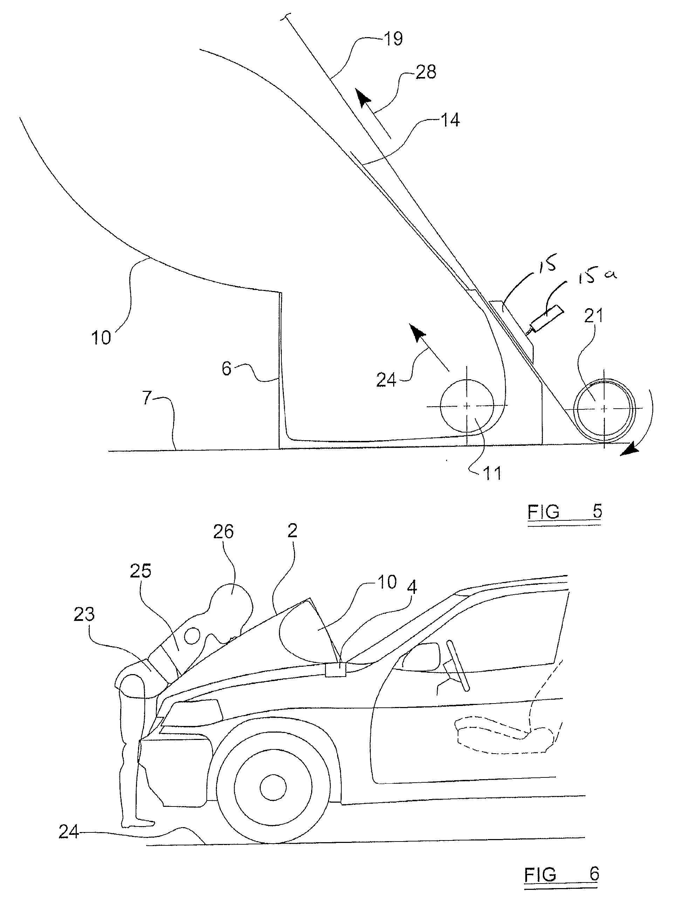

Turning now to consider figures 5 and 6, actuation and operation of the above-described embodiment of the present invention will now be described.

Upon detection of a likely or actual impact between the vehicle 1 and a pedestrian 23, the control unit 13 issues an actuating signal to the inflator 11 to actuate the inflator 11 in a manner known *per* se. A large volume of inflating gas is thus rapidly produced by the inflator and directed into the inflatable volume of the airbag 10 as denoted by arrow 24 in figure 5, thereby inflating the airbag 10 between the hood 2 and the underlying structure 7 of the vehicle 1. As the airbag 10 begins to inflate, it ruptures or otherwise forces open the door 14 at the top of the housing 6 and thus deploys out of the housing 6 and impinges on the underside of the hood 2. Continuing inflation of the airbag 10 is thus effective to lift the rear part of the hood 2, driving it forcibly upwards away from the housing 6 and the underlying structure 7 of the vehicle towards an elevated position as illustrated in figure 6. As will be appreciated, the airbag 10 thus serves as a hood-lifter, replacing the generally mechanical piston-driven arrangements of conventional hood-lifting devices.

As illustrated in figure 6, the elevated position to which the hood 2 is driven by the inflating airbag 10 is considerably more steeply inclined relative to the ground 24 than is generally the case with conventional hood-lifting arrangements, this being a function of the significant size of the airbag 10. It will thus be appreciated that in this significantly elevated position, not only will the hood 2 prevent potentially harmful deceleration of the pedestrian's torso 25 or head 26 though contact between the hood 2 and the underlying engine of the vehicle as the pedestrian's weight causes deformation to the hood 2, but also the steep angle of the hood 2 will prevent (or at least significantly reduce the chance of) the pedestrian's head 26 or torso 25 making contact with the windscreen 3 of the vehicle.

With particular reference to figure 5, it is to be noted that as the rear part of the hood 2 is driven upwardly from its initial position illustrated in figures 1 and 3 towards its elevated position illustrated in figure 6, the hood will exert a pulling force on the tether 19, against the rotational bias of the retractor reel 21. The reel 21 will thus be caused to rotate in a direction (indicated schematically by arrow 27 in figure 5) counter to its bias, thereby permitting the tether to be paid out from the reel (as denoted schematically by arrow 28) as the rear part of the hood 2 is driven upwardly. The tether 19 is thus pulled from the reel 21. The reel 21 is biased only relatively lightly in comparison to the pulling force applied by the rapidly moving hood and thus presents insignificant restriction to the pay-out of the tether under the rapid upwards movement of the hood 2.

The clamp arrangement defined by the cooperating clamp member 15 and clamping surface 9 is controlled during inflation of the airbag 10 by the control unit 13 and in particular in dependence on signals from the sensor 13a. During an initial stage in the inflation of the airbag 10, the clamp member 15 remains in its initial position in which it is spaced from the clamping surface 9, and thus the tether 19 is permitted to pay out through the channel 17 in an unrestricted manner. However, as inflation of the airbag progresses, and the hood 2 reaches its optimum protective position, the clamp arrangement is actuated via its actuator 15a under the control of the control unit 13 to close via movement of the clamp member 15 towards the clamping surface 9, thereby trapping the tether 19 between the opposing clamping surfaces 9, 16 and preventing further pay-out of the tether 19. The tether 19 will thus become tensioned between the clamp arrangement and the hood 2, thereby defining a limit to the upwards movement of the hood 2 during actuation of the hood-lifter.

Actuation of the clamp arrangement is controlled by the control unit 13 in dependence on signals from the sensor 13a, and in preferred embodiments is controlled in dependence on signals representative of the speed of the vehicle 1 and/or the closing speed between the vehicle 1 and the pedestrian 23, so as to limit the range through which the hood 2 is lifted in an active manner. More particularly, it is envisaged that the clamp arrangement will be controlled so as to permit lifting of the hood through a relatively large range (i.e. to achieve a relatively steep angle to the horizontal 24 in its elevated position) in response to a low vehicle speed or closing speed between the vehicle and a pedestrian, but will be controlled so to permit the hood to be lifted through a smaller range (i.e. to achieve a relatively shallow angle to the horizontal 24 in its elevated position) in response to a higher vehicle speed or closing speed between the vehicle and a pedestrian. In this manner, the hood 2 will be raised as high as possible for the prevailing crash conditions, noting that for a higher speed impact with a pedestrian, the hood 2 should not be raised so high as for a slower speed impact in order to reduce the likelihood of the hood still moving upwards as it is struck by the pedestrian.

The tether 19 in combination with the clamp arrangement formed by the clamping surface 9 and the moveable clamp member 15 can thus be considered to define an active range limiter in the sense that they cooperate to limit the range through which the hood 2 is lifted by the airbag 10 in dependence on a signal from the sensor 13a and thus in accordance with the prevailing crash conditions.

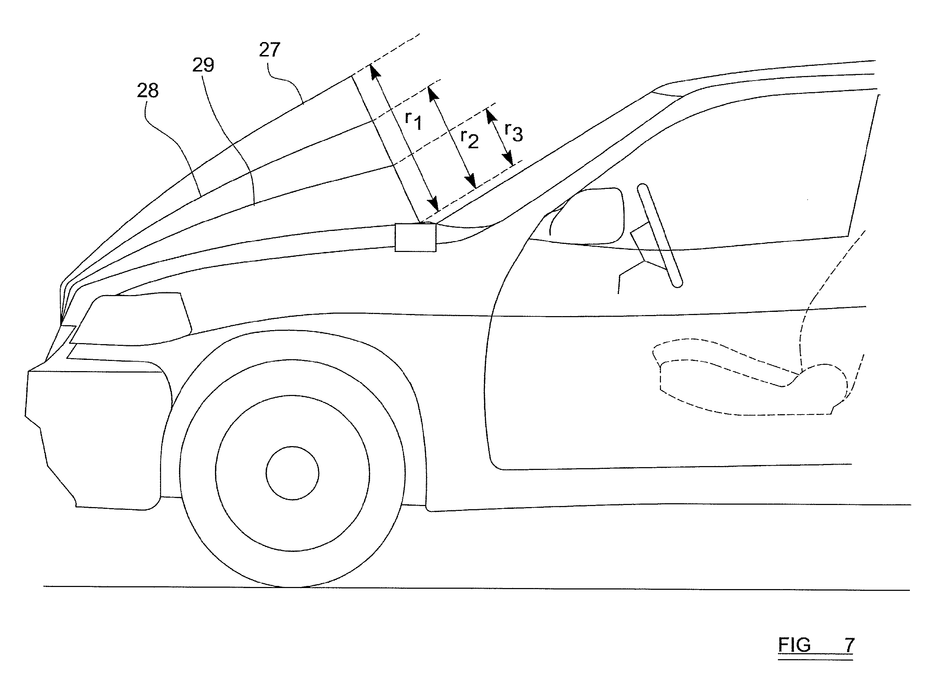

In a preferred embodiment it is proposed that the active range limiter of the present invention will be operable to limit the range through which the hood 2 is lifted by the airbag to three possible limits. Figure 7 illustrates schematically the elevated positions of the hood corresponding to each of the lifting range limits. Accordingly, it will be noted that the highest position 27 corresponds to a first range limit r₁, the middle position 28 corresponds to a second range limit r₂, and the lower position 29 corresponds to a third range limit r₃, where r₁>r₂>r₃. It is proposed that the control unit 13 will control the clamp arrangement so as to i) permit appropriate pay-out of the tether and then to close the clamp arrangement to limit the lifting range to the first range limit r₁ in response to a signal from the sensor 13a representative of the vehicle speed and/or closing speed between the vehicle and a pedestrian being above a first predetermined threshold speed value V₁; ii) permit appropriate pay-out of the tether and then to close the clamp arrangement to limit the lifting range to the second range limit r₂ in response to a signal from the sensor 13a representative of the vehicle speed and/or closing speed between the vehicle and a pedestrian being above a second predetermined threshold speed value V₂; and iii) permit appropriate pay-out of the tether and then to close the clamp arrangement to limit the lifting range to the third range limit r₃ in response to a signal from the sensor 13a representative of the vehicle speed and/or closing speed between the vehicle and a pedestrian being above a second predetermined threshold speed value v₃. In this operating regime, it is proposed that v₁<v₂<v₃. Purely by way of an example, it is proposed that v₁ may be 30 km/h, v₂ may be 60 km/h, and v₃ may be 90 km/h.

Of course, it is to be appreciated that alternative embodiments of the invention could operate according to regimes including fewer or more than three discrete hood lifting range limits in a similar manner.

As will be noted from figure 7, regardless of the actual actuated position of the hood 2, when it is in its raised position the hood will hinder, and in most cases actually block the view of the driver of the vehicle through the windscreen 3 of the vehicle. It is therefore proposed that some sort of arrangement or mechanism will be provided to lower the hood back towards its initial unactuated position after the impact between the vehicle and the pedestrian, or after a predetermined time period following actuation of the lifting arrangement, to restore the driver's view through the windscreen. One proposal for such an arrangement is to make use of the retractor 21. For example, the bias in the retractor 21 tending to wind in the tether 19 could be used to pull the hood 2 back down upon release of the clamp arrangement 15 and venting of the inflating gas within the airbag 10. However, as it is proposed that the inherent bias of the retractor 21 will be relatively light in order to ensure that it does not inhibit the free pay-out of the tether 19 during lifting of the hood 2, it is proposed that the retractor could be associated with a stronger biasing mechanism (for example comprising a spring) which is engaged with the retractor to pull the hood down via the tether 19 upon release of the clamp arrangement. Alternatively, a separate lowering mechanism could be provided which is operable independently of the retractor reel 21.

Whilst the invention has been described above with reference to a particular embodiment, it is to be noted that various modifications and alterations can be made without departing from the scope of the claimed invention. For example, it is envisaged that other configurations of active range limiters could be used instead of the above-described arrangement incorporating a tether and a clamp arrangement. It is envisaged that one such alternative could comprise a telescopic stop device configured to extend between the hood and the underlying vehicle structure as the hood is lifted, and for its extension to be controlled by the controller 13 in dependence on signals from the sensor 13a.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A safety arrangement on a motor vehicle (1) having a hood (2), the safety arrangement having a hood-lifter (10) actuable to lift at least the rear part of the vehicle's hood (2) from an initial position to an elevated position (27-29), and being **characterised by** the provision of an active range limiter (9, 15, 19) operatively connected to at least one sensor (13a) and configured to limit the range (r₁, r₂, r₃) through which said hood (2) is lifted by said hood-lifting arrangement (10) in dependence on a signal from said at least one sensor (13a).

2. A safety arrangement according to claim 1, wherein the hood-lifter includes an airbag (10) arranged for inflation between the hood (2) and the underlying structure (7) of the vehicle (1) to lift the hood (2) from said initial position to said elevated position (27-29).

3. A safety arrangement according to claim 1 or claim 2, wherein said active range limiter includes a tether (19) connected between the hood (2) and the underlying structure (7) of the vehicle (1).

4. A safety arrangement according to claim 3, wherein the tether (19) is arranged to become tensioned along at least part of its length between the hood (2) and the underlying structure (7) of the vehicle (1), as the hood (2) is lifted by the hood-lifter (10), to thereby define a limit to the upwards movement of the hood (2).

5. A safety arrangement according to claim 3 or claim 4, wherein the tether (19) passes through a clamp arrangement (9,15,17) beneath the hood (2), the clamp arrangement initially being open to allow substantially free passage of the tether (19) as the hood (2) is lifted from its initial position, and being actuable in response to said signal to close and thus clampingly engage the tether (19).

6. A safety arrangement according to any one of claims 3 to 5, wherein said tether (19) is initially wound on a reel (21) rotatably mounted to the structure (7) of the vehicle beneath the hood (2), the reel (21) being arranged to permit pay-out of the tether (19) as the hood (2) is lifted from its initial position.

7. A safety arrangement according to claim 6, wherein said reel (21) is a retractor reel.

8. A safety arrangement according to any preceding claim, wherein said at least one sensor (13a) includes a pre-crash sensor configured to detect the likely occurrence of an impact between the vehicle (1) and a pedestrian (23) or cyclist.

9. A safety arrangement according to claim 8, wherein said pre-crash sensor (13a) is configured to produce a signal representative of the speed of the vehicle (1) and/or the closing speed between the vehicle (1) and said pedestrian (23) or cyclist.

10. A safety arrangement according to any one of claims 1 to 7, wherein said at least one sensor (13a) includes a crash sensor configured to detect the occurrence of an impact between the vehicle (1) and a pedestrian (23)or cyclist.

11. A safety arrangement according to claim 10, wherein said crash sensor (13a) is configured to produce a signal representative of the speed of the vehicle (1).

12. A safety arrangement according to claim 9 or claim 11, wherein the active range limiter is configured to limit the range (r₁, r₂, r₃) through which said hood (2) is lifted in dependence on the speed of the vehicle and/or the closing speed between the vehicle and said pedestrian or cyclist.

13. A safety arrangement according to claim 12, wherein said active range limiter is configured to limit the range through which said hood is lifted to a first range limit (r₁) in response to a signal representative of said speed or closing speed being above a first predetermined threshold speed value (v₁), and to a second range limit (r₂) in response to a signal representative of said speed or closing speed being above a second predetermined threshold speed value (v₂).

14. A safety arrangement according to claim 13, wherein the second range limit (r₂) is smaller than the first range limit (r₁), and the second threshold speed value (v₂) is greater than the first predetermined threshold value (v₁).

15. A safety arrangement according to claim 14, wherein said active range limiter is further configured to limit the range through which the hood (2) is lifted to a third range limit (r₃) in response to a signal representative of said speed or closing speed being above a third predetermined threshold value (v₃), the third range limit (r₃) being smaller than the second range limit (r₂), and the third predetermined threshold speed value (v₃) being greater than the second predetermined threshold speed value (v₂).
